Europäisches Patentamt

**European Patent Office**

**Office européen des brevets**

(19)

(11) Numéro de publication: **0 137 885**
**B1**

# (12) FASCICULE DE BREVET EUROPEEN

(45) Date de publication du fascicule du brevet:
**22.06.88**

(21) Numéro de dépôt: **83810406.5**

(22) Date de dépôt: **07.09.83**

(51) Int. Cl.⁴: **G 02 C 5/22**

(54) **Charnière de lunettes.**

(43) Date de publication de la demande:
**24.04.85 Bulletin 85/17**

(45) Mention de la délivrance du brevet:
**22.06.88 Bulletin 88/25**

(84) Etats contractants désignés:
**AT DE FR IT**

(56) Documents cités:
**EP - A - 0 036 837**
**FR - A - 2 342 392**
**US - A - 3 957 360**

(73) Titulaire: **LN INDUSTRIES S.A., 2, Rue des Falaises,**
**CH-1211 Geneve 8 (CH)**

(72) Inventeur: **Beyer, Karl, 49, avenue de Vaudagne,**
**CH-1217n Meyrin (Genève) (CH)**

(74) Mandataire: **Ardin, Pierre et al, PIERRE ARDIN &**
**CIE 22, rue du Mont-Blanc Case postale 60,**
**CH-1211 Genève 1 (CH)**

ACTORUM AG

## Description

Les charnières de lunettes se divisent en deux groupes principaux, à savoir, les charnières dites élastiques et les charnières non élastiques.

Dans les charnières élastiques, une des parties de charnière présente un profil de came avec lequel coopère un poussoir élastique appartenant à l'autre partie de charnière (FR-A 2 342 392). Les charnières de ce genre sont appréciées des usagers, bien qu'elles soient plus coûteuses, car elles présentent l'avantage d'avoir des position repliée et déployée bien marquées et la position d'ouverture normale des branches peut être dépassée contre une action élastique de rappel, ce qui permet une application élastique des branches contre les tempes de l'usager.

Jusqu'à présent, les marchands de lunettes devaient avoir en stock des montures avec branches équipées de charnière non élastique et de charnière élastique.

Un des buts de l'invention est de diminuer le stock d'articles dont a besoin un marchand pour fournir à son client, à volonté, une monture avec ou sans charnières élastiques.

L'invention a aussi pour but de rendre la fabrication des branches plus rationelle et moins coûteuse, tout en permettant de créer des branches très légères et d'aspect esthétique favorable.

A cet effet, l'invention a pour objet une charnière de lunettes non élastique telle que définie dans la revendication 1.

Le dessin annexé représente schématiquement et à titre d'exemple une forme d'exécution de la charnière faisant l'objet de l'invention.

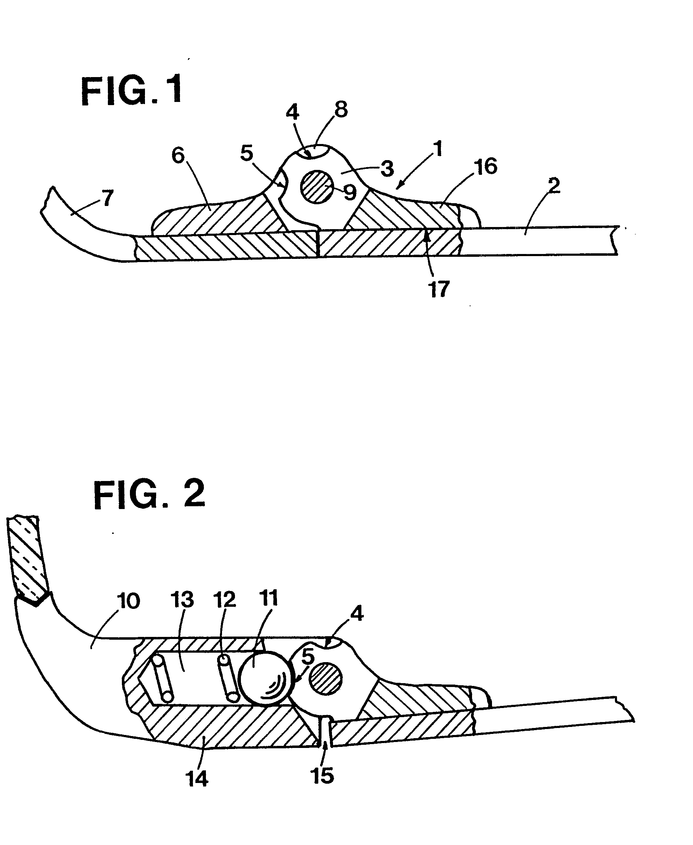

La figure 1 est une vue de cette exécution, avec coupe partielle. La figure 2 montre une élastique.

En référence à la figure 1, une partie de charnière 1 est soudée sur une branche 2. Cette partie 1 comprend un charnon mâle 3 présentant deux encoches 4 et 5 ménagées sur sa périphérie. L'autre partie de charnière 6 est soudée sur la partie face 7 d'une monture de lunettes et présente deux charnons femelles dont un seul 8 est visible à la figure 1. Les charnons sont articulés les uns sur les autres de façon classique par une vis 9 à portée constituant l'axe d'articulation et dont la partie filetée coopère avec un alésage taraudé d'un charnon femelle.

Il est bien évident que dans la version non élastique, les encoches 4 et 5 ne jouent aucun rôle au point de vue du fonctionnement de la charnière. Par contre, ces encoches permettent d'obtenir une charnière élastique avec la même branche, comme le montre la figure 2.

A la figure 2, la partie face 10 d'une monture de lunettes est équipée d'une partie de charnière munie d'un poussoir élastique. Ce dernier est constitué par une bille 11, logée avec un ressort 12 dans un trou borgne 13 d'une corne 14 de la partie face 10.

La position entre la corne 14 et la branche 2 est prévue de façon qu'il subsiste un jeu 15 entre l'extrémité avant de la branche 2 et la corne 14, lorsque la branche est dans sa position déployée illustrée à la figure 2. Cette position est bien définie par l'engagement partiel de la bille 11 dans l'encoche 5. On voit qu'en exerçant une poussée pour donner une plus grande position d'ouverture à la branche 2, on peut faire pivoter cette dernière contre l'action du cran formé par le poussoir et l'encoche 5 jusqu'à une position limite pour laquelle le jeu 15 devient nul.

Le charnon mâle 3 qui constitue un élément de came grâce à la présence des encoches 4 et 5 doit présenter une bonne résistance à l'usure. Il est habituellement réalisé en une matière durcissable, par exemple de l'acier inoxydable trempable ou à durcissement structurel. Comme on le voit, la partie de charnière 1 comprend le charnon 3 qui est venu d'une pièce avec une semelle 16 présentant une surface plane 17, destinée à être soudée sur la branche 2. La fixation peut être réalisée par soudure électrique par points, de sorte que l'élévation de température se produit principalement sur la semelle 16, tandis que la portion du charnon 3 qui coopère avec la bille 1 reste en dessous de la température qui provoquerait sa détrempe.

La charnière décrite est très avantageuse car la forme des branches est indépendante du fait qu'elles sont destinées à être pourvues d'une charnière élastique ou non. Il n'est donc plus nécessaire de prévoir des moules ou des matrices différentes pour fabriquer des branches destinées à être équipées de charnières normales ou de charnières élastiques, ce qui se traduit par un abaissement du coût de fabrication et une diminution de la quantité de branches que l'opticien doit tenir en réserve dans son magasin.

Bien entendu, on peut prévoir diverses modifications de la charnière décrite. Notamment, la semelle 16 et le charnon 3 pourraient être réalisés en deux pièces distinctes solidaires l'une et l'autre. De même, le poussoir élastique peut être réalisé de toutes façon connues et le profil de l'élément de came du charnon 3 pourrait aussi présenter des formes différentes.

## Revendications

1. Charnière de lunettes non élastique comprenant deux parties articulées l'une sur l'autre, une partie conformée pour pouvoir être fixée sur la branche de lunettes comprenant un charnon mâle et une partie conformée pour être fixée à la partie face des lunettes comprenant des charnons femelles, caractérisée en ce que le charnon mâle présente au moins une encoche sur une portion de son pourtour, de façon à permettre d'utiliser cette même branche munie de son charnon mâle pour la monter sur une partie de charnon femelle munie d'une poussoir à ressort venant coopérer avec l'encoche du charnon mâle pour obtenir de la sorte une charnière du type élastique.

2. Charnière selon la revendication 1, caractérisée en ce que le charnon mâle présente deux encoches disposées de façon à définir, en coopération avec le poussoir à ressort, une position d'ouverture de la branche et une position de fermeture de celle-ci.

3. Charnière selon la revendication 2, caractérisée en ce que le charnon mâle est conformé de façon à permettre, en coopération avec le poussoir à ressort, une ouverture de la branche au-delà de la position donnée par la coopération entre le poussoir et l'encoche définissant la position d'ouverture.

4. Charnière selon l'une des revendications précédentes, caractérisée en ce que le charnon mâle est en un métal durcissable.

5. Charnière selon la revendication 4, caractérisée en ce que le charnon mâle est solidaire d'une semelle métallique présentant une surface plane destinée à permettre son soudage sur une branche métallique.

**Patentansprüche**

1. Nicht elastisches Brillenscharnier, umfassend zwei miteinander gelenkig verbundene Teile, wobei ein Teil derart ausgebildet ist, dass er auf dem Brillenbügel befestigt werden kann, der einen männlichen Scharnierteil umfasst, und wobei ein Teil derart ausgebildet ist, dass er auf dem gesichtsseitigen Teil der Brille befestigt werden kann, der weibliche Scharnierteile umfasst, dadurch gekennzeichnet, dass der männliche Scharnierteil auf einem Abschnitt seines äusseren Umfangs mindestens eine Vertiefung aufweist, so dass dieser mit einem männlichen Scharnierteil versehene Bügel dazu verwendbar ist, auf einem Teil des weiblichen Scharnierteils angebracht zu werden, welcher mit einem federbelasteten Drückelement versehen ist, das mit der Vertiefung des männlichen Scharnierteils zusammenwirkt, wodurch ein Scharnier vom elastischen Typ gebildet wird.

2. Scharnier nach Anspruch 1, dadurch gekennzeichnet, dass der männliche Scharnierteil zwei Vertiefungen aufweist, die derart angeordnet sind, dass sie bei Zusammenwirken mit dem federbelasteten Drückelement eine Öffnungs- und eine Verschlussstellung des Bügels bestimmen.

3. Scharnier nach Anspruch 2, dadurch gekennzeichnet, dass der männliche Scharnierteil derart ausgebildet ist, dass er bei Zusammenwirken mit dem federbelasteten Drückelement eine Öffnung des Bügels über die Öffnungsstellung hinausgehend ermöglicht, die durch das Zusammenwirken von Drückelement und Vertiefung vorgegeben ist.

4. Scharnier nach einem der vorhergehenden Ansprüche, dadurch gekennzeichnet, dass der männliche Scharnierteil aus einem härtbaren Metall besteht.

5. Scharnier nach Anspruch 4, dadurch gekennzeichnet, dass der männliche Scharnierteil fest mit einer Metallsohle verbunden ist, die eine ebene Oberfläche aufweist, welche dazu vorgesehen ist, ihr Auflöten auf einem Metallbügel zu ermöglichen.

**Claims**

1. A spectacle hinge, non-resilient, comprising two parts articulated to each other, one part being adapted to be fixed on the spectacle arm comprising a male knuckle and the other part being adapted to be fixed to the front part of the spectacles comprising female knuckles, characterized in that the male knuckle presents at least one notch on a portion of its circumference in order to make it possible to use this same arm, provided with its male knuckle, to be mounted on a part of the female knuckle provided with a spring urged push member which co-operates with the notch of the male knuckle so as to provide a hinge of the resilient type.

2. A hinge according to claim 1, characterized in that the male knuckle has at least two notches arranged in such a way as to define, in co-operation with the spring urged push member, an opening position of the arm and a closing position of said arm.

3. A hinge according to claim 2, characterized in that the male knuckle is conformed such as to allow, in co-operation with the spring urged push member, an opening of the arm beyond the position given by the co-operation between the push member and the notch which defines the opening position.

4. A hinge according to one of the preceding claims characterized in that the male knuckle is made of a metal capable of being hardened.

5. A hinge according to claim 4, characterized in that the male knuckle is solid with a metallic sole presenting a plane surface adapted to allow its soldering on a metallic arm.

# FIG. 1

# FIG. 2